# EUROPÄISCHE PATENTSCHRIFT

(11) **EP 0 715 927 B1**
(45) Veröffentlichungstag und Bekanntmachung des Hinweises auf die Patenterteilung: **28.03.2001**
(21) Anmeldenummer: 95118930.7
(22) Anmeldetag: 01.12.1995
(51) Int. Cl.: B23K 35/26, C22C 13/00

(54) **Bleifreies Weichlot und seine Verwendung**
Lead-free solder and its use
Soudure tendre pour plomb et son utilisation

(30) Priorität: 07.12.1994 DE 4443459
(43) Veröffentlichungstag der Anmeldung: 12.06.1996
(73) Patentinhaber: WIELAND-WERKE AG, 89079 Ulm (DE)
(72) Erfinder: Buresch, Isabell, Dipl.-Ing. Dr.rer.nat., D-89257 Illertissen (DE)

(56) Entgegenhaltungen:
- EP-A- 0 254 355
- EP-A- 0 612 577
- DATABASE WPI Week 9009 Derwent Publications Ltd., London, GB; AN 90-065773 & SU-A-1 479 250 (KIEV MASMA LUB MAT) , 15.Mai 1989
- JOM, Bd. 45, Nr. 7, Juli 1993 WARRENDALE US, Seiten 36-40, XP 000383232 M. MCCORMACK ET AL 'Progress in the Design of New Lead-Free Solder Alloys '
- PATENT ABSTRACTS OF JAPAN vol. 94 no. 12 & JP-A-06 344180 (NIPPON ARUMITSUTO) 20.Dezember 1994,

## Beschreibung

Die Erfindung betrifft ein bleifreies Weichlot, bestehend aus einer Zinn-Legierung gemäβ der Ansprüche 1 und 3.

An in der Technik verwendete Weichlote für die Elektronik und Elektrotechnik werden üblicherweise folgende Forderungen gestellt:

Weichlote müssen ein gutes Benetzungsverhalten gegenüber den metallischen Teilen zeigen, welche thermisch gefügt werden. Dabei darf der Schmelzpunkt von Weichloten nicht über 450 °C liegen. In der Praxis haben die meisten Weichlote Schmelzpunkte bzw. Schmelzbereiche weit unter 450 °C, d. h. zwischen 180 °C und 300 °C. Für die Elektronik ist es von Bedeutung, daß der Schmelzpunkt ausreichend über den max. Betriebstemperaturen liegt, aber andererseits niedrig genug ist, um damit Bauteile zu fertigen, die diese Temperaturen beim Weichlöten aushalten.

Diese Forderungen werden bisher im breiten Rahmen von SnPb-Loten erfüllt.

Da jedoch aus Umweltschutzgründen mit dem Verbot von Blei zu rechnen ist, müssen die SnPb-Lote durch bleifreie Lote ersetzt werden. Es sind bereits SnBi- und SnIn-Lote bekannt geworden, die sich insbesondere aufgrund ihres niedrigen Schmelzpunktes als Alternative für SnPb-Lote eignen. Ähnlich wie SnPb-Lote benetzen diese bleifreien Lote Kupfer-, Nickel- und Gold-Substrate (vgl. beispielsweise die Aufsätze "Microstructure and Mechanical Properties of Sn-In and Sn-Bi Solders" von J.W. Morris et al. und "The Properties of Tin-Bismuth Alloy Solders" von L.E. Felton et al. in Journal of Metals, July 1993, S. 25 bis 27 bzw. 28 bis 32).

Lote bilden die Grenzflächen zwischen zwei verschiedenen Materialien. Durch die unterschiedlichen Ausdehnungskoeffizienten der zu fügenden Materialien wirken bei Temperaturwechsel, wie z. B. Abkühlen nach dem Löten oder Einhausen der Bauteile (Umspritzen mit Kunststoff) Scherspannungen im Lot.

Reine CuBi-Lote und ihre intermetallische Phase (IMP) zeigen bei Raumtemperatur ein grobes Korn, welches bei Einsatztemperaturen über Raumtemperatur zu starkem Kornwachstum neigt. Ein grobes Korn bzw. das Kornwachstum beeinflußt die Eigenschaften der Lötverbindung negativ.

Der Erfindung liegt daher die Aufgabe zugrunde, ein bleifreies Weichlot (Sn-Legierung) der eingangs genannten Art mit niedrigem Schmelzpunkt zur Verfügung zu stellen, welches eine geringere Korngröße und ein vermindertes Kornwachstum aufweist und damit eine höhere Festigkeit der Lötverbindung.

Diese Aufgabe wird erfindungsgemäß dadurch gelöst, daß die Zinn-Legierung nach einer ersten Variante aus
0,1 bis 57 Gew.-% Wismut oder
0,1 bis 50 Gew.-% Indium;
0,001 bis 5 Gew.-% Kobalt;
Rest Zinn und üblichen Verunreinigungen,
nach einer zweiten Variante aus
0,1 bis 20 Gew.-% Wismut und
0,05 bis 35 Gew.-% Indium;
0,001 bis 5 Gew.-% Kobalt;
Rest Zinn und üblichen Verunreinigungen besteht.
(die Prozentangaben beziehen sich dabei auf das Gewicht).

Kobalt bewirkt eine insgesamt feinkörnige Struktur des Lotes und nach Benetzung beispielsweise auf Kupfer, Nickel und Gold und deren Legierungen eine feinkörnige, intermetallische Phase (IMP), (vgl. Tabelle), welche die Festigkeit der Verbindung gelöteter Bauteile erhöht. Die feinkörnige, gleichmäßige intermetallische Phase bewirkt nicht nur eine höhere Gesamtschichthärte, bessere Biegbarkeit, höhere Scherfestigkeit und niedrigeren Elastizitäsmodul (E-Modul), sondern insbesondere auch eine hohe Kriechbeständigkeit. Unter Kriechbeständigkeit soll dabei die Beständigkeit gegen bei Langzeitbeanspruchung auftretende zeit- und temperaturabhängige Verformungsprozesse verstanden werden.

| | Korngröße des Lotes | | Korngröße der IMP | |
|---|---|---|---|---|
| | ohne Co | mit 0,3% Co | ohne Co | mit 0,5% Co |
| SnBi57 | 200 - 430 | 100 - 160 | | |
| SnBil5 | - 200 | 30 - 35 | | 4 - 10 |
| SnIn48 | | 5 - 20 | | |
| SnBi5In3 | | 5 - 40 | 15 - 26 | 3,3-8,8 |

Ein Weichlot mit Zinn und/oder Wismut und/oder Indium, das 0,2 bis 50 % unlöslicher Metallteilchen (Eisen, Kobalt, Nickel) enthält, ist aus der EP-A-0.612.577 bekannt. Dort ist nur der Gesamtgehalt von Sn und/oder Bi und/oder In offenbart, nicht jedoch die Einzelgehalte an Sn, Bi und In. Beispiele für ein Weichlot mit Co-Zusatz fehlen völlig.

Nach bevorzugten Ausführungsformen enthält die erste Variante der Zinn-Legierung 5 bis 57 % Gew.-% Wismut oder 3 bis 50 Gew.-% Indium, die zweite Variante 5 bis 20 Gew.-% Wismut und 3 bis 35 Gew.-% Indium.

Für beide Varianten empfiehlt sich ein Zusatz von jeweils 0,003 bis 0,5 Gew.-% Kobalt.

Aufgrund der geschilderten Eigenschaften eignet sich das erfindungsgemäße Weichlot vorzugsweise zum Löten von Leiterplatten, Halbleiterbauelementen und elektronischen Bauteilen aller Art. Unter Löten werden dabei alle gängigen Löttechniken (u. a. Handlöten, Reflow-, Dampfphasen-, Infrarot-, Wellen-Löten u. a.) verstanden.

Weitere Verwendungszwecke sind die Feuerverzinnung von Bändern aus Kupfer, Nickel, Eisen und deren Legierungen sowie das Tauchverzinnen von Substraten aus Kupfer, Nickel, Eisen und Gold und deren Legierungen sowie von mit Kupfer-, Gold-, Nickel-, Palladium- und Silber-Metallisierungen versehenen Bauteilen und Leiterplatten.

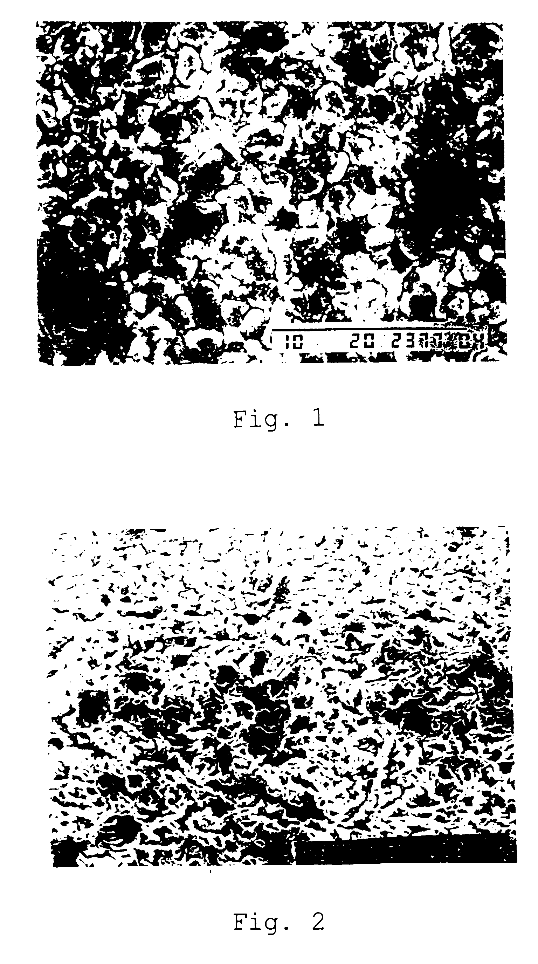

Die Erfindung wird anhand des folgenden Ausführungsbeispiels näher erläutert. Es wird die kornfeinende Wirkung eines Kobalt-Zusatzes von 0,5 % für eine SnBi5In3-Legierung gezeigt (Fig. 1/2). Dabei wurde eine 1 bis 3 µm dicke Oberflächenschicht auf schmelzflüssigem Wege (Feuer- bzw. Tauchverzinnung) auf ein Zinnbronze(CuSn6)-Band aufgebracht. Die Fig. 1 und 2 zeigen die intermetallische Phase jeweils in einer Vergrößerung 5000:1.

## Patentansprüche

1. Bleifreies Weichlot, bestehend aus einer Zinn-Legierung mit 0,1 bis 57 Gew.-% Wismut oder 0,1 bis 50 Gew.-% Indium; 0,001 bis 5 Gew.-% Kobalt; Rest Zinn und üblichen Verunreinigungen.

2. Weichlot nach Anspruch 1, dadurch gekennzeichnet,
daß die Zinn-Legierung 5 bis 57 Gew.-% Wismut oder 3 bis 50 Gew.-% Indium enthält.

3. Bleifreies Weichlot, bestehend aus einer Zinn-Legierung mit 0,1 bis 20 Gew.-% Wismut und 0,05 bis 35 Gew.-% Indium; 0,001 bis 5 Gew.-% Kobalt; Rest Zinn und üblichen Verunreinigungen.

4. Weichlot nach Anspruch 3, dadurch gekennzeichnet,
daß die Zinn-Legierung 5 bis 20 Gew.-% Wismut und 3 bis 35 Gew.-% Indium enthält.

5. Weichlot nach Anspruch 1 oder 2 bzw. 3 oder 4, dadurch gekennzeichnet, daß die Zinn-Legierung 0,003 bis 0,5 Gew.-% Kobalt enthält.

6. Verwendung des Weichlots nach einem oder mehreren der Ansprüche 1 bis 5 für das Löten von Leiterplatten, Halbleiterbauelementen und elektronischen Bauteilen aller Art.

7. Verwendung des Weichlots nach einem oder mehreren der Ansprüche 1 bis 5 zur Feuerverzinnung von Bändern aus Kupfer, Nickel, Eisen und deren Legierungen.

8. Verwendung des Weichlots nach einem oder mehreren der Ansprüche 1 bis 5 für das Tauchverzinnen von Substraten aus Kupfer, Nickel, Eisen und Gold und deren Legierungen sowie von mit Kupfer-, Gold-, Nickel-, Palladiumund Silber-Metallisierungen versehenen Bauteilen und Leiterplatten.

## Claims

1. Lead-free soft solder, comprising a tin alloy having from 0.1 to 57% by weight of bismuth or from 0.1 to 50% by weight of indium; from 0.001 to 5% by weight of cobalt; remainder tin and usual impurities.

2. Soft solder according to claim 1, characterised in that the tin alloy contains from 5 to 57% by weight of bismuth or from 3 to 50% by weight of indium.

3. Lead-free soft solder, comprising a tin alloy having from 0.1 to 20% by weight of bismuth and from 0.05 to 35% by weight of indium; from 0.001 to 5% by weight of cobalt; remainder tin and usual impurities.

4. Soft solder according to claim 3, characterised in that the tin alloy contains from 5 to 20% by weight of bismuth and from 3 to 35% by weight of indium.

5. Soft solder according to claim 1 or 2, or 3 or 4, characterised in that the tin alloy contains from 0.003 to 0.5% by weight of cobalt.

6. Use of the soft solder according to one or more of claims 1 to 5 for soldering printed circuit boards, semiconductor components and electronic components of all kinds.

7. Use of the soft solder according to one or more of claims 1 to 5 for hot-tinning ribbons of copper, nickel, iron and the alloys thereof.

8. Use of the soft solder according to one or more of claims 1 to 5 for dip-tinning substrates of copper, nickel, iron and gold and the alloys thereof and also printed circuit boards and components provided with copper, gold, nickel, palladium and silver metallisation.

## Revendications

1. Brasure pour brasage tendre sans plomb consistant en un alliage d'étain avec 0,1 à 57 % en masse de bismuth ou 0,1 à 50 % en masse d'indium, 0,001 à 5 % en masse de cobalt, le reste étant de l'étain et des impuretés habituelles.

2. Brasure pour brasage tendre selon la revendication 1, caractérisée en ce que l'alliage d'étain contient 5 à 57 % en masse de bismuth ou 3 à 50 % en masse d'indium.

3. Brasure pour brasage tendre sans plomb consistant en un alliage d'étain avec 0.1 à 20 % en masse de bismuth et 0,05 à 35 % en masse d'indium. 0,001 à 5 % en masse de cobalt, le reste étant de l'étain et des impuretés habituelles.

4. Brasure pour brasage tendre selon la revendication 3, caractérisée en ce que l'alliage d'étain contient 5 à 20 % en masse de bismuth et 3 à 35 % en masse d'indium.

5. Brasure pour brasage tendre selon la revendication 1 ou 2, ou 3 ou 4, caractérisée en ce que l'alliage d'étain contient 0,003 à 0,5 % en masse de cobalt.

6. Utilisation de la brasure pour brasage tendre selon une ou plusieurs des revendications 1 à 5 pour le brasage de plaques conductrices, d'éléments à semi-conducteurs et d'éléments électroniques de tout type.

7. Utilisation de la brasure pour brasage tendre selon une ou plusieurs des revendications 1 à 5 pour l'étamage à chaud de bandes de cuivre, de nickel, de fer et de leurs alliages.

8. Utilisation de la brasure pour brasage tendre selon une ou plusieurs des revendications 1 à 5 pour l'étamage à immersion de substrats en cuivre, nickel, fer et or et leurs alliages ainsi que d'éléments et plaques conductrices munis de métallisations de cuivre, d'or, de nickel, de palladium et d'argent.
